# FASCICULE DE BREVET EUROPEEN

(11) **EP 0 512 929 B1**
(45) Date de publication et mention de la délivrance du brevet: **06.12.1995**
(21) Numéro de dépôt: 92420138.7
(22) Date de dépôt: 24.04.1992
(51) Int. Cl.: H02B 1/30, H02B 1/40

(54) **Rehaussé pour coffret électrique**
Bodenrahmen für elektrischen Kasten
Base frame for electrical box

(30) Priorité: 29.04.1991 FR 9105548
(43) Date de publication de la demande: 11.11.1992
(73) Titulaire: SCHNEIDER ELECTRIC SA, 92100 Boulogne Billancourt (FR)
(72) Inventeur: Pellicano, Joseph, F-38050 Grenoble Cedex 9 (FR); Balaud, Philippe, F-38050 Grenoble Cedex 9 (FR)
(74) Mandataire: Hecké, Gérard

(56) Documents cités:
- EP-A- 0 028 553
- EP-A- 0 281 983
- DE-A- 1 753 051
- DE-A- 2 715 579
- FR-A- 1 496 775
- GB-A- 1 053 352
- NL-A- 8 403 319
- US-A- 4 255 611

## Description

La présente invention concerne de façon générale une rehausse pour coffret électrique qui est constituée de piliers et de parois latérales dont chacune peut venir se fixer, au niveau de deux de ses extrémités opposées, à deux des piliers.

Généralement, une telle rehausse est destinée à venir se fixer sur une surface de fixation plane, par exemple sur un mur, afin de servir de base pour la fixation d'un coffret électrique ou d'un dispositif similaire. Communément, une telle rehausse est composée de quatre piliers et de quatre parois latérales de sorte que l'ensemble constitue un cadre rectangulaire dont les coins sont formés par les piliers et dont les côtés sont formés par les parois latérales.

Les rehausses classiques connues jusqu'à présent comprennent en général quatre piliers qui ne peuvent être positionnés de façon précise aux quatre coins du rectangle qu'ils doivent définir qu'en étant fixés sur un châssis rigide destiné à constituer le support d'au moins un rail de fixation des composants électriques. Après avoir ainsi fixé les quatre piliers à l'arrière de ce châssis rigide, l'ensemble ainsi constitué pouvait être fixé sur une surface de fixation, par exemple sur un mur, en reliant par vissage ces quatre piliers sur la surface de fixation. Ensuite, il était nécessaire de compléter la structure constituant la rehausse en disposant successivement les quatre parois latérales entre les piliers de façon à former ainsi un volume fermé parallélépipédique délimité à l'arrière par la surface de fixation, à l'avant par le châssis et les composants électriques que ce dernier supporte et latéralement par les quatre parois latérales du pilier. Dans de telles rehausses de l'art antérieur, les parois latérales et les piliers sont agencés de telle sorte qu'une paroi latérale comporte une rainure ou une nervure sur chacun de ses deux côtés qui est destinée à venir en contact avec un pilier correspondant, et chaque pilier comporte une rainure ou nervure de forme complémentaire à celle présente sur la paroi latérale, de telle sorte que la paroi latérale doit être déplacée vers les piliers selon une direction de déplacement perpendiculaire à la surface de fixation de la rehausse afin d'emboîter les rainures ou nervures de la paroi latérale dans les formes complémentaires des piliers. Chaque paroi latérale est par conséquent reliée de part et d'autre à deux piliers selon un mode de liaison du type glissière.

Une rehausse de ce type présente plusieurs inconvénients. Tout d'abord, la personne chargée d'effectuer une installation électrique doit procéder au montage des différentes pièces qui constituent l'ensemble formé par la rehausse et par les autres composants du coffret électrique selon un ordre particulier quasiment unique. Plus précisément, cette personne doit commencer par fixer les quatre piliers sur un châssis rigide approprié et doit ensuite fixer les piliers sur la surface de fixation, par exemple sur le mur. Ensuite, la personne doit monter les parois latérales de la rehausse en les empilant par coulissement entre deux piliers situés sur le côté correspondant de la rehausse. On comprend que dans ces conditions, la paroi latérale ne peut s'enfiler correctement dans les éléments de glissière correspondants des deux piliers que si l'écartement de ces deux piliers correspond de façon précise à la dimension de la paroi latérale. Si ces deux piliers sont trop rapprochés, le montage de la paroi latérale n'est plus possible et si ces deux piliers sont trop éloignés, la paroi latérale risque de ne plus pouvoir se fixer correctement entre les piliers et risque de tomber. Ce risque ne peut être écarté qu'en prévoyant la construction d'un châssis très rigide et surtout présentant une relativement grande précision dimensionnelle, ce qui renchérit notablement son coût de fabrication. D'autre part, la liaison entre un pilier et le châssis devait être prévue de façon à ce que le pilier ne puisse être fixé au châssis que dans une position très précise suivant tous les degrés de liberté de l'espace à trois dimensions. La fixation des piliers sur le châssis était donc précise et délicate et impliquait des formes structurelles compliquées et coûteuses.

Par ailleurs, du fait que la fixation des piliers sur la surface de fixation ne pouvait s'effectuer qu'après avoir monté le châssis sur les piliers, elle était rendue plus difficile à cause de la présence du châssis en avant des piliers, ce châssis pouvant gêner l'opération de fixation des piliers sur le mur.

Un objet de la présente invention consiste à fournir une rehausse qui puisse être montée très facilement et qui permette un montage très facile de l'ensemble du coffret électrique qui est destiné à venir sur elle.

Un autre objet de l'invention consiste à fournir une telle rehausse autorisant l'utilisation d'un châssis moins compliqué et plus écomomique.

Encore un autre objet de l'invention consiste à fournir une telle rehausse qui puisse être montée selon plusieurs ordres différents de montage afin d'accroître sa commodité en fonction de différentes situations de montage qui peuvent se présenter.

L'invention concerne donc une rehausse pour coffret électrique constituée de piliers et de parois latérales dont chacune peut venir se fixer, au niveau de deux de ses extrémités opposées, à deux des piliers, cette rehausse étant destinée à venir se fixer sur une surface de fixation sensiblement plane.

Selon une caractéristique essentielle de l'invention, chaque pilier comprend au moins une face latérale externe sensiblement perpendiculaire à ladite surface de fixation et au moins un premier élément de verrouillage disposé au voisinage de ladite face latérale ; chaque paroi latérale comprend, au niveau de chacune de ses dites extrémités opposées, au moins un second élément de verrouillage destiné à coopérer avec ledit premier élément de verrouillage d'un pilier ; et lesdits premier et second éléments de verrouillage sont agencés de telle sorte que l'assemblage d'une paroi latérale avec un pilier soit obtenu en déplaçant d'abord ladite paroi latérale vers le pilier suivant un premier déplacement perpendiculaire à ladite face latérale du pilier et en déplaçant ensuite ladite paroi latérale suivant un second déplacement dans le plan de ladite face latérale du pilier afin d'obtenir un verrouillage positif de la paroi latérale avec le pilier.

Selon un mode de réalisation particulier de l'invention, les premier et second éléments de verrouillage sont agencés de telle sorte que ledit second déplacement de la paroi latérale s'effectue selon une direction sensiblement perpendiculaire à ladite surface de fixation de la rehausse et que ce déplacement est dirigé vers cette surface de fixation.

Les différents modes d'utilisation et d'autres avantages de la rehausse selon l'invention ressortiront plus clairement de la description qui va suivre de différents modes de mise en oeuvre de l'invention donnés à titre d'exemples non limitatifs et représentés sur les dessins annexés, parmi lesquels :
la figure 1 est une vue en plan d'une rehausse selon la présente invention, dans laquelle un des éléments est démonté par souci d'illustration ;
la figure 2 est une vue agrandie en coupe transversale selon la ligne II-II de la figure 1, représentant la rehausse dans une première position de l'opération de montage ;
la figure 3 est une vue similaire à celle de la figure 2 représentant la même rehausse dans une deuxième position de l'opération de montage ;
la figure 4 est une vue similaire à celle de la figure 2 représentant la même rehausse dans une troisième position de l'opération de montage ; et
la figure 5 est une vue en plan de la rehausse représentée sur la figure 1 à laquelle est associé un châssis de coffret électrique ; et
la figure 6 est une vue de côté de l'ensemble représenté sur la figure 5.

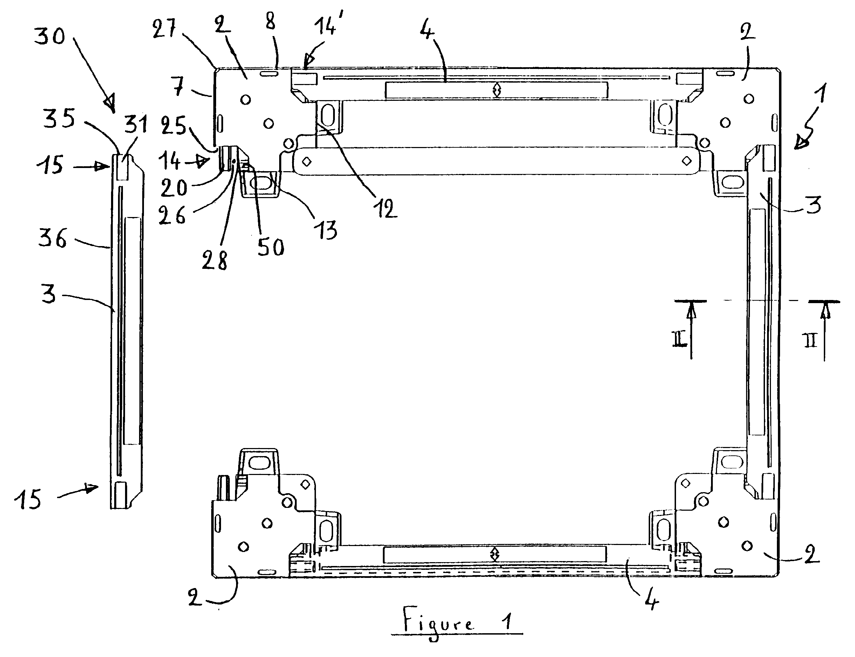

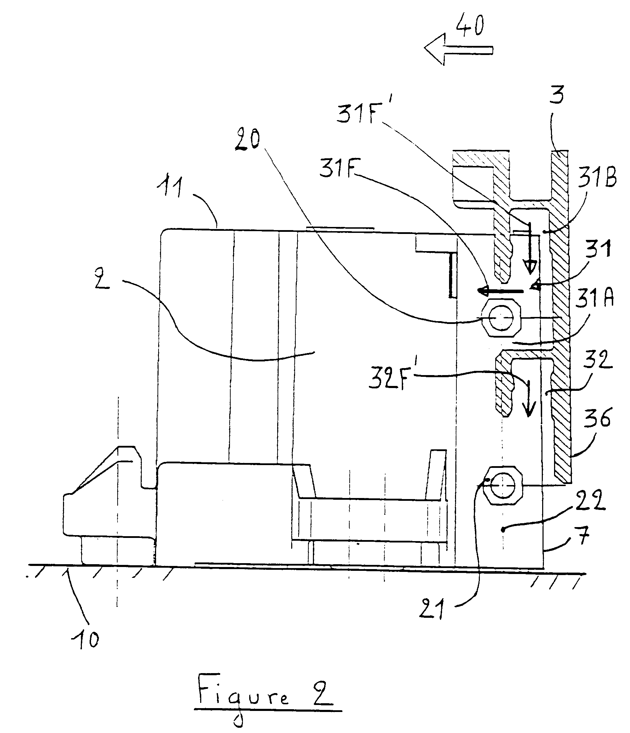

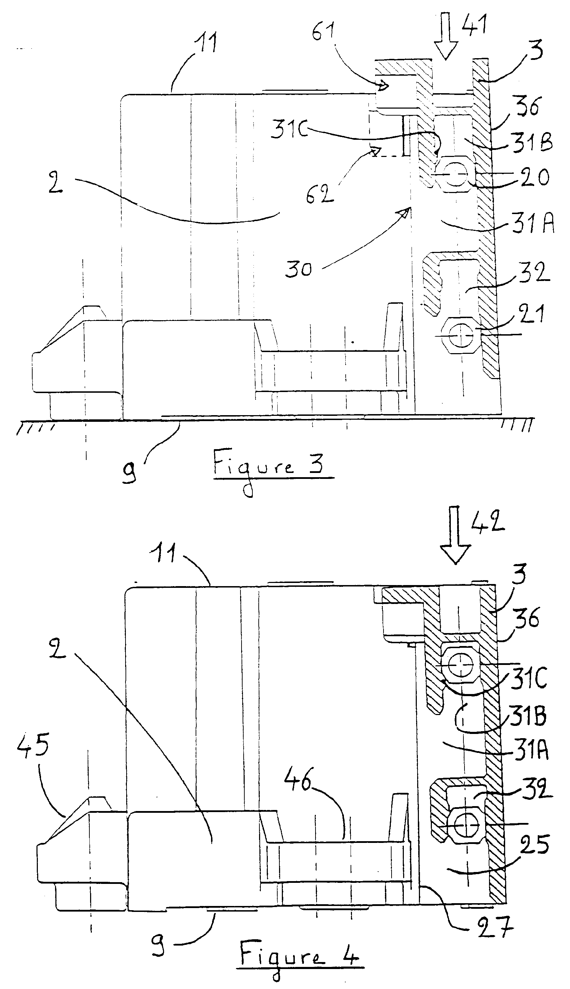

La figure 1 représente, en vue en plan, une rehausse selon la présente invention. En général, une telle rehausse présente la forme générale d'un cadre rectangulaire occupant un volume sensiblement parallélépipédique, dans lequel les quatre côtés de la rehausse ont des dimensions relativement grandes par rapport à l'épaisseur de la rehausse. D'autre part, une telle rehausse est en général destinée à être fixée sur un mur, c'est-à-dire sur une surface de fixation qui est sensiblement plane et verticale. Dans la suite du texte, on appellera surface de fixation la surface sensiblement plane ou le mur sur lequel la rehausse doit être fixée. En se reportant à la figure 1, la rehausse 1 selon l'invention comprend quatre piliers 2 identiques et quatre parois latérales identiques deux à deux 3, 4. Les deux parois latérales 3 sont verticales et constituent deux montants. Les deux parois latérales 4 sont horizontales et constituent deux traverses. La rehausse 1 est constituée par conséquent par huit pièces distinctes, chacune de ces pièces étant, de préférence, réalisée sous la forme d'une seule pièce en matière plastique moulée. Le pilier 2 comprend deux faces latérales externes perpendiculaires entre elles 7, 8 qui constituent un coin extérieur de la rehausse 1 lorsque celle-ci est assemblée. Les deux faces latérales 7, 8 sont sensiblement perpendiculaires à une surface plane arrière 9 (figure 3) du pilier qui est destinée à venir en appui contre la surface de fixation 10 (figure 2) de la rehausse (cette surface de fixation 10 a été définie précédemment). Le pilier (2) peut, de préférence, présenter une forme générale parallélépipédique délimitée par les deux faces latérales externes 7, 8, par la face arrière 9, par une face avant 11 (figure 3) opposée à la face arrière et par deux autres faces latérales 12, 13 dirigées vers l'intérieur de la rehausse lorsque celle-ci est assemblée. Le pilier 2 comporte en outre deux moyens de verrouillage 14, 14′ disposés respectivement au voisinage des deux faces latérales externes 7 et 8. Le moyen de verrouillage 14 est identique au moyen de verrouillage 14′ et par conséquent, on ne va décrire qu'un seul de ces deux moyens de verrouillage. Le moyen de verrouillage 14 est constitué de deux pions superposés 20, 21, c'est-à-dire que ces deux pions 20, 21 sont disposés en alignement sur une ligne fictive 22 sensiblement perpendiculaire à la surface de fixation 10 (voir figure 2). Les pions 20 et 21 ont une forme identique et ils présentent une allure générale cylindrique dont l'axe longitudinal est parallèle à la face latérale correspondante 7 du pilier et est parallèle également à la surface de fixation 10. De préférence, comme cela est représenté sur la figure 2, les pions 20, 21 présentent une section transversale octogonale. Les pions 20 et 21 sont fixés perpendiculairement, en formant protubérance, sur une première face 25 d'un logement 26 ménagé sur la face latérale 7 du pilier, au niveau du côté opposé à l'arête d'angle extérieure 27 du pilier. Ce logement est en forme de dièdre concave et il est constitué par la première face 25 et par une seconde face 28 perpendiculaire à la première face 25, ce dièdre étant perpendiculaire à la surface de fixation 10.

Les quatres parois latérales 3, 4, c'est-à-dire les deux montants 3 et les deux traverses 4, présentent, au niveau de leurs deux extrémités latérales respectives, un second élément de verrouillage 30 qui est destiné à venir coopérer avec l'un quelconque des premiers éléments de verrouillage 14 des piliers 2. Tous les seconds éléments de verrouillage 30 sont identiques. On peut distinguer aisément la forme et la structure du second élément de verrouillage 30 en regardant en bout une paroi latérale 3 ou 4, ou ce qui revient sensiblement au même, en regardant la partie représentée en coupe de la paroi latérale 3 telle qu'elle apparaît dans les figures 2, 3 ou 4. En se reportant aux figures 2 à 4, on distingue en détail la structure du second élément de verrouillage 30 d'une paroi latérale quelconque 3 ou 4. Ce second élément de verrouillage 30 est constitué par deux évidements 31, 32. L'évidement 31 est composé d'une première zone d'évidement 31A qui débouche à l'extérieur de la pièce qui forme la paroi latérale 3 (ou 4). Ce débouchement s'effectue suivant une direction qui est indiquée par la flèche 31F, c'est-à-dire en suivant une direction perpendiculaire à la face latérale 7 du pilier 2. L'évidement 31 comprend également une seconde zone d'évidement 31B qui débouche dans la première zone d'évidement 31A en suivant une direction sensiblement perpendiculaire à la surface de fixation 10 de la rehausse (cette direction est indiquée par la flèche 31F′). En d'autres termes, on peut dire que l'évidement 31 est constitué par un canal qui s'étend vers le bas dans une première partie et qui tourne à 90° pour s'étendre ensuite horizontalement pour déboucher à l'extérieur de la paroi latérale 3 ou 4. On peut dire aussi que l'évidement 31 constitue en fait un crochet dirigé vers l'intérieur et vers le bas. L'évidement 32 débouche simplement vers le bas d'une façon semblable à celle de la seconde zone d'évidement 31B (flèche 32F′). L'évidement 32 forme aussi un crochet dirigé vers l'intérieur de la rehausse et vers le bas, c'est-à-dire vers la surface de fixation 10.

L'ensemble de l'évidement 31 ou 32 peut en outre déboucher, dans sa totalité, à l'extérieur de la paroi latérale 3 ou 4 suivant une direction longitudinale de cette paroi latérale. En d'autres termes, l'évidement 31 et 32 présente la forme d'une gorge en L ménagée dans la face 35 de l'extrémité latérale de la paroi latérale 3 ou 4. La branche horizontale du L est dirigée vers l'intérieur de la rehausse lorsque cette dernière est assemblée. La zone d'extrémité de la paroi latérale 3 ou 4 dans laquelle est ménagé le second élément de verrouillage 31, 32 présente une forme complémentaire à celle du logement en forme de dièdre concave 26 qui est ménagé dans le pilier 2. Cela permet à la paroi latérale 3, 4 de venir s'emboîter, au niveau de son extrémité latérale, dans une partie évidée (c'est-à-dire le logement 26) correspondante du pilier 2, de telle sorte que la surface externe plane 36 de la paroi latérale 3, 4 vient dans le même plan que le plan de la face latérale 7 ou 8 du pilier 2 lorsque la paroi latérale 3, 4 est verrouillée sur le pilier 2.

Sur la figure 1, on distingue trois parois latérales (une référencée 3 et deux autres référencées 4) qui sont verrouillées sur les quatre piliers 2, tandis que la quatrième paroi latérale (référencée 3) n'est pas verrouillée sur les piliers 2 correspondants. Lorsque les quatre parois latérales sont ainsi verrouillées sur les quatre piliers, l'ensemble constitue la rehausse qui est dite assemblée.

On va maintenant décrire en détail l'opération permettant d'obtenir l'assemblage d'une paroi latérale 3 ou 4 avec un pilier 2, en se reportant successivement aux figures 2, 3 et 4. Pour obtenir ce verrouillage, on commence par amener une paroi latérale 3 (ou 4) vers un pilier 2 en déplaçant, dans un premier temps, la paroi latérale 3 vers le pilier 2 suivant un premier déplacement sensiblement perpendiculaire à la face latérale 7 du pilier 2 (flèche 40). Au cours de ce mouvement, les deux pions 20, 21 pénètrent simultanément respectivement dans les deux logements 31, 32, le pion 20 pénétrant dans la première zone d'évidement 31A du logement 31.

Ensuite, on procède à un second déplacement de la paroi latérale 3, ce second déplacement étant effectué dans le plan de la face latérale 7 du pilier 2, ce second déplacement étant plus exactement effectué suivant une direction perpendiculaire à la surface de fixation 10 (flèche 41 sur la figure 3). La paroi latérale 3 est alors en position de début de verrouillage sur le pilier 2, comme représenté sur la figure 3. Dans cette position, les deux pions 20, 21 ou au moins l'un 20 de ces deux pions, s'engagent dans la seconde zone d'évidement 31B, et dans le logement 32. On peut ensuite continuer à déplacer la paroi latérale 3 vers le bas (flèche 42 de la figure 4) pour finir de verrouiller la paroi latérale 3 sur le pilier 2 et, au cours de ce mouvement, les pions 20, 21, ou bien l'un 20 de ces deux pions glisse dans les seconds logements 31, 32 en passant une zone resserrée 31C de l'évidement afin d'obtenir, du fait de l'élasticité du matériau constituant l'évidement, un effet de verrouillage positif par encliquetage. Lorsque la paroi latérale 3 est complètement verrouillée positivement sur le pilier 2, comme cela est représenté sur la figure 4, l'ensemble de ces deux pièces constitue un dispositif unique qui présente une bonne rigidité d'ensemble.

Lorsque l'on poursuit l'assemblage de quatre parois latérales avec quatre piliers, on obtient de la sorte une rehausse de forme rectangulaire qui présente une très bonne rigidité et qui peut être facilement manipulée, stockée ou transportée, et qui peut aussi être appliquée sur une surface de fixation 10 (c'est-à-dire en général sur un mur) pour y être fixée par tout moyen approprié, en général par vissage.

Un tel vissage d'une rehausse selon la présente invention sur une surface de fixation 10 peut être obtenu en prévoyant sur chaque pilier 2 au moins une embase, et de préférence deux embases 45, 46 qui sont situées contre une partie latérale correspondante 12, 13 du pilier. Si l'on prévoit ainsi deux embases 45, 46 par pilier, on dispose de huit embases pour une rehausse assemblée, ces embases étant prévues pour laisser passer au travers des éléments de fixation par exemple des vis qui viennent se visser dans le mur.

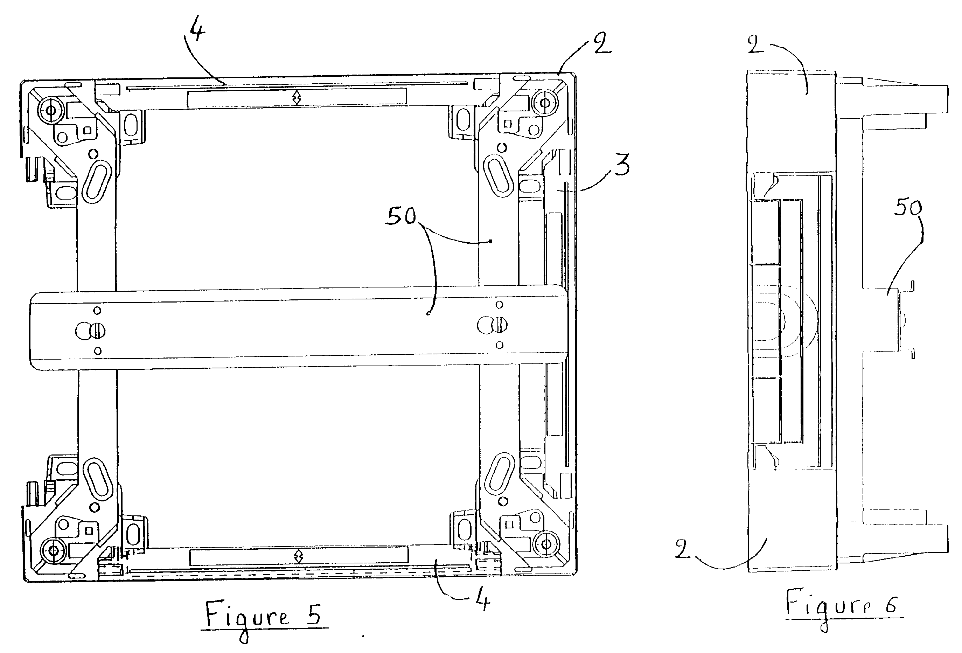

Dans la figure 5, on distingue une rehausse selon la présente invention sur laquelle a été fixé un châssis 50 qui permet de recevoir plusieurs dispositifs électriques (non représentés). On voit sur cette figure que la rehausse n'est que partiellement assemblée puisqu'il manque l'une des parois latérales 3. Comme la rehausse selon la présente invention permet indifféremment de pouvoir monter une paroi latérale 3 ou 4 sur un pilier 2 avant ou après que les piliers 2 aient été fixés au mur 10, on peut par exemple commencer par assembler l'ensemble de la rehausse, c'est-à-dire les quatre parois latérales 3, 4 sur les quatre piliers 2, afin d'obtenir une structure rigide puis on peut fixer l'ensemble au mur 10. Ensuite, on peut enlever par exemple l'une des parois latérales puisque la fixation de la rehausse sur le mur 10 s'effectue au niveau des piliers 2. Cela permet de pouvoir accéder latéralement, par l'espace qui n'est pas occupé par une paroi latérale manquante, au volume intérieur de la rehausse, en particulier afin de pouvoir accéder à l'arrière des dispositifs électriques qui doivent être montés sur le châssis 50 ou pour pouvoir effectuer le passage ou le branchement de fils électriques qui peuvent passer dans le volume intérieur de la rehausse. On peut ensuite, au moment de son choix, remettre en place la paroi latérale manquante pour la fixer aux deux piliers correspondants afin de former la rehausse complète.

On peut envisager d'utiliser plus de quatre piliers pour l'assemblage d'une rehausse. On peut aussi.envisager de construire un pilier ou une paroi latérale en un certain nombre de pièces moulées ou usinées et assemblées rigidement.

## Revendications

1. Rehausse pour coffret électrique constituée de piliers (2) et de parois latérales (3, 4) dont chacune peut venir se fixer, au niveau de deux de ses extrémités opposées, à deux des piliers (2), cette rehausse étant destinée à venir se fixer sur une surface de fixation plane (10), la rehausse étant caractérisée en ce que :
chaque pilier (2) comprend au moins une face latérale externe (7, 8) perpendiculaire à ladite surface de fixation (10) et au moins un premier élément de verrouillage (14) disposé au voisinage de ladite face latérale ;
chaque paroi latérale (3, 4) comprend, au niveau de chacune de ses dites extrémités opposées, au moins un second élément de verrouillage (15) destiné à coopérer avec ledit premier élément de verrouillage (14) d'un pilier ; et en ce que
lesdits premier et second éléments de verrouillage (14, 15) sont agencés de telle sorte que l'assemblage d'une paroi latérale (3, 4) avec un pilier (2) soit obtenu en déplaçant d'abord ladite paroi latérale vers le pilier suivant un premier déplacement (40) perpendiculaire à ladite face latérale (7, 8) du pilier et en déplaçant ensuite ladite paroi latérale suivant un second déplacement (41) dans le plan de ladite face latérale du pilier afin d'obtenir un verrouillage positif de la paroi latérale avec le pilier.

2. Rehausse selon la revendication 1, caractérisée en ce que les premier et second éléments de verrouillage (14, 15) sont agencés de telle sorte que ledit second déplacement (41) de la paroi latérale s'effectue selon une direction perpendiculaire à ladite surface de fixation (10) de la rehausse et que ce déplacement est dirigé vers cette surface de fixation.

3. Rehausse selon l'une quelconque des revendications précédentes, caractérisée en ce que ledit premier élément de verrouillage (14) est constitué par au moins un pion (20, 21) formant protubérance par rapport au pilier, ce pion ayant son axe longitudinal parallèle au plan de ladite surface de fixation (10), et en ce que ledit second élément de verrouillage (15) est constitué par au moins un évidement (31) composé d'une première zone d'évidement (31A) débouchant de la paroi latérale (3, 4) en suivant une direction (31F) perpendiculaire à ladite face latérale (7, 8) du pilier correspondant et d'une seconde zone d'évidement (31B) débouchant dans la première zone d'évidement (31A) en suivant une direction (31F) perpendiculaire à ladite surface de fixation (10).

4. Rehausse selon l'une des revendications précédentes, caractérisée en ce que chaque pilier (2) comprend un logement (26) ménagé dans ladite face latérale (7, 8) et en ce que ledit premier élément de verrouillage (14) est disposé dans ce logement de telle sorte que ladite paroi latérale (3, 4) vienne se loger, au niveau de son extrémité qui comporte ledit second élément de verrouillage (15), dans ce logement (26) du pilier afin de se verrouiller au pilier selon une position dans laquelle la surface latérale (36) externe de ladite paroi latérale est dans le même plan que ladite face latérale (7) correspondante du pilier.

5. Rehausse selon la revendication 4, caractérisée en ce que :
ledit logement (26) présente la forme d'une gorge rectiligne en forme de dièdre concave comprenant une première face (25) perpendiculaire d'une part à ladite face latérale (7) du pilier correspondant et d'autre part à ladite surface de fixation (10) de la rehausse, et une seconde face (28) perpendiculaire d'une part à ladite première face (25) et d'autre part à ladite surface de fixation de la rehausse, et en ce que ledit pion (20, 21) est fixé sur ladite première face (25) du logement ; et
ladite extrémité de ladite paroi latérale (3, 4) présente une forme de dièdre convexe qui épouse la forme du dièdre concave dudit logement (26) ménagé dans le pilier.

6. Rehausse selon l'une quelconque des revendications 3 à 5, caractérisée en ce qu'il est prévu deux premiers éléments de verrouillage (20, 21) espacés l'un de l'autre et alignés suivant une direction (22) perpendiculaire à ladite surface de fixation (10), l'espacement de ces deux premiers éléments de verrouillage étant inférieur à la hauteur dudit pilier (2) ou de ladite paroi latérale (3, 4), et en ce qu'il est prévu également deux seconds éléments de verrouillage (31, 32) disposés sur ladite paroi latérale de façon à correspondre auxdits deux premiers éléments de verrouillage (20, 21) lorsque ladite paroi latérale (3, 4) vient se verrouiller sur le pilier (2).

7. Rehausse selon la revendication 6, caractérisée en ce que l'un (31) des deux seconds éléments de verrouillage a sa seconde zone d'évidement (31B) plus profonde que la seconde zone d'évidement de l'autre (32) second élément de verrouillage de sorte que lorsque ladite paroi latérale (3, 4) est complètement en place sur le pilier (2) pour s'y verrouiller, un seul des deux premiers éléments de verrouillage vienne en butée contre la paroi latérale (3, 4) au niveau du fond de la seconde zone de l'un desdits évidements.

8. Rehausse selon l'une quelconque des revendications précédentes, caractérisée en ce qu'il est en outre prévu des moyens (50) sur le pilier (2) et sur la paroi latérale (3, 4) assurant un verrouillage supplémentaire de ces deux pièces qui est destiné à empêcher leur écartement l'une par rapport à l'autre suivant une direction suivant laquelle l'effet de verrouillage obtenu par lesdits premier et second éléments de verrouillage n'agit pas, ledit verrouillage supplémentaire étant obtenu par emboîtement d'une élément de ladite paroi latérale dans un élément dudit pilier, cet emboîtement se produisant lors dudit second déplacement de ladite paroi latérale.

9. Rehausse selon l'une quelconque des revendications précédentes, caractérisée en ce qu'il est en outre prévu sur chaque pilier au moins une embase pour la fixation par vis sur ladite surface de fixation, cette embase étant située contre une partie latérale du pilier placée à l'intérieur du périmètre de la rehausse une fois assemblée de sorte que l'embase et que les vis correspondantes ne soient pas visibles depuis l'extérieur de la rehausse assemblée.

10. Rehausse selon l'une quelconque des revendications précédentes, caractérisée en ce qu'elle est constituée par quatre piliers identiques et par quatre parois latérales identiques deux à deux de sorte que l'ensemble constitue une rehausse rectangulaire, et en ce que chaque pilier est de forme générale parallélépipédique, avec deux faces latérales perpendiculaires formant l'angle extérieur de la rehausse, et présente une symétrie par rapport à un plan médian par rapport aux deux faces latérales.

## Patentansprüche

1. Aufsetzrahmen für einen Elektroinstallationskasten, bestehend aus Eckstützen (2) und Seitenwänden (3, 4), die jeweils an zwei ihrer einander gegenüberliegenden Enden an zwei der Eckstützen (2) befestigt werden, wobei dieser Aufsetzrahmen dazu dient, auf einer ebenen Befestigungsfläche (10) befestigt zu werden, dadurch gekennzeichnet, daß
jede Eckstütze (2) mindestens eine rechtwinklig zur genannten Befestigungsfläche (10) angeordnete äußere Seitenfläche (7, 8) sowie mindestens ein erstes in der Nähe der genannten Seitenfläche angeordnetes Verriegelungselement (14) aufweist,
jede Seitenwand (3, 4) an jedem ihrer einander gegenüberliegenden genannten Enden mindestens ein zweites Verriegelungselement (15) aufweist, das dazu dient, mit dem ersten Verriegelungselement (14) einer Eckstütze zusammenzuwirken, und
die genannten ersten und zweiten Verriegelungselemente (14, 15) so ausgebildet sind, daß die Verbindung einer Seitenwand (3, 4) mit einer Eckstütze (2) erreicht wird, indem die genannte Seitenwand zunächst in einer, senkrecht zur genannten Seitenfläche (7, 8) der Eckstütze verlaufenden, ersten Bewegung (40) an die Eckstütze angenähert und anschließend in einer, in der Ebene der genannten Seitenfläche der Eckstütze verlaufenden, zweiten Bewegung (41) verschoben wird, um eine sichere Verriegelung zwischen Seitenwand und Eckstütze zu erzielen.

2. Aufsetzrahmen nach Anspruch 1, dadurch gekennzeichnet, daß die ersten und zweiten Verriegelungselemente (14, 15) so ausgebildet sind, daß die genannte zweite Bewegung (41) der Seitenwand in einer senkrecht zur genannten Befestigungsfläche (10) des Aufsetzrahmens verlaufenden Richtung erfolgt und die Seitenwand dabei auf diese Befestigungsfläche zubewegt wird.

3. Aufsetzrahmen nach irgendeinem der vorhergehenden Ansprüche, dadurch gekennzeichnet, daß das genannte erste Verriegelungselement (14) aus mindestens einem, aus der Eckstütze herausstehenden Zapfen (20, 21) besteht, dessen Längsachse parallel zur Ebene der genannten Befestigungsfläche (10) verläuft, und daß das genannte zweite Verriegelungselement (15) aus mindestens einer Aussparung (31) besteht, die sich aus einem, längs einer senkrecht zur Seitenwand (7, 8) verlaufenden Richtung (31F) aus der genannten Seitenwand herausgeführten, ersten Aussparungsbereich (31A) sowie einem zweiten Aussparungsbereich (31B) zusammensetzt, der längs einer senkrecht zur genannten Befestigungsfläche (10) verlaufenden Richtung (31F′) in den ersten Aussparungsbereich (31A) übergeht.

4. Aufsetzrahmen nach irgendeinem der vorhergehenden Ansprüche, dadurch gekennzeichnet, daß jede Eckstütze (2) eine in der genannten Seitenfläche (7, 8) ausgebildete Aufnahme (26) aufweist und daß das genannte erste Verriegelungselement (14) in dieser Aufnahme angeordnet ist, derart daß die genannte Seitenwand (3, 4) mit ihrem, das genannte zweite Verriegelungselement (15) aufweisenden Ende in diese Aufnahme (26) der Eckstütze eingesetzt wird, um an dieser Eckstütze in einer Position verriegelt zu werden, in der die äußere Seitenfläche (36) der genannten Seitenwand in einer Flucht mit der entsprechenden genannten Seitenfläche (7) der Eckstütze liegt.

5. Aufsetzrahmen nach Anspruch 4, dadurch gekennzeichnet, daß die genannte Aufnahme (26) als geradlinige Kehle in Form einer Aushöhlung ausgebildet ist, die eine erste, einerseits senkrecht zur genannten Seitenfläche (7) der zugehörigen Eckstütze und andererseits senkrecht zur genannten Befestigungsfläche (10) des Aufsetzrahmens verlaufende Fläche (25) sowie eine, einerseits senkrecht zur genannten ersten Fläche (25) und andererseits senkrecht zur genannten Befestigungsfläche des Aufsetzrahmens verlaufende zweite Fläche (28) aufweist, daß der genannte Zapfen (20, 21) an der genannten ersten Fläche (25) der Aufnahme befestigt ist, und daß das genannte Ende der genannten Seitenwand (3, 4) einen Vorsprung aufweist, die sich an die Form der Aushöhlung der genannten, in der Eckstütze ausgebildeten Aufnahme (26) anschmiegt.

6. Aufsetzrahmen nach irgendeinem der Ansprüche 3 bis 5, dadurch gekennzeichnet, daß zwei erste Verriegelungselemente (20, 21) in einem bestimmten Abstand und in einer senkrecht zur genannten Befestigungsfläche (10) verlaufenden Ebene fluchtend zueinander angeordnet sind, wobei der Abstand zwischen diesen beiden ersten Verriegelungselementen geringer als die Höhe der genannten Eckstütze (2) bzw. der genannten Seitenwand (3, 4) ist, und daß außerdem zwei zweite Verriegelungselemente (31, 32) an der genannten Seitenwand ausgebildet sind, derart daß diese mit den genannten ersten Verriegelungselementen (20, 21) zusammenwirken, wenn die genannte Seitenwand (3, 4) auf der Eckstütze (2) verriegelt wird.

7. Aufsetzrahmen nach Anspruch 6, dadurch gekennzeichnet, daß der zweite Aussparungsbereich (31B) des einen (31) der beiden zweiten Verriegelungselemente tiefer ist als der zweite Aussparungsbereich des anderen (32) zweiten Verriegelungselements, derart daß nur eines der beiden ersten Verriegelungselemente am Boden des zweiten Bereichs einer der genannten Aussparungen in Anschlag gegen die Seitenwand (3, 4) gelangt, wenn die genannte Seitenwand (3, 4) zur Verriegelung vollständig auf die Eckstütze (2) aufgesteckt ist.

8. Aufsetzrahmen nach irgendeinem der vorhergehenden Ansprüche, dadurch gekennzeichnet, daß an den Eckstützen (2) sowie an der Seitenwand (3, 4) Mittel (50) zur Gewährleistung einer zusätzlichen Verriegelung dieser beiden Teile ausgebildet sind, welche dazu dient, ein Auseinanderziehen der Teile längs einer Richtung, in der die Verriegelung durch die genannten ersten und zweiten Verriegelungselemente nicht wirksam ist, zu verhindern, wobei die genannte Zusatzverriegelung durch Ineinanderstecken eines Elements der genannten Seitenwand und eines Elements der genannten Eckstütze erreicht wird und dieses Ineinanderstecken während der zweiten Bewegung der genannten Seitenwand erfolgt.

9. Aufsetzrahmen nach irgendeinem der vorhergehenden Ansprüche, dadurch gekennzeichnet, daß jede Eckstütze des weiteren mindestens eine Lasche zur Schraubbefestigung auf der genannten Befestigungsfläche aufweist, die an eine innerhalb der Begrenzung des fertig montierten Aufsetzrahmens liegende Seitenfläche der Eckstütze angrenzt, so daß bei zusammengebautem Aufsetzrahmen die Lasche und die zugehörigen Schrauben von außen nicht sichtbar sind.

10. Aufsetzrahmen nach irgendeinem der vorhergehenden Ansprüche, dadurch gekennzeichnet, daß er aus vier identischen Eckstützen sowie vier, paarweise identischen Seitenwänden besteht, so daß die gesamte Anordnung einen rechteckigen Aufsetzrahmen bildet, und daß jede Eckstütze annähernd die Form eines Quaders mit zwei, die äußere Eckkante des Aufsetzrahmen bildenden, rechtwinklig zueinander angeordneten Seitenflächen aufweist und zu einer auf die beiden Seitenflächen bezogenen Mittelebene symmetrisch ausgebildet ist.

## Claims

1. A spacer for an electrical cabinet formed by pillars (2) and side walls (3, 4) each of which can be fixed at the level of two of its opposite ends to two of the pillars (2), this spacer being designed to fix onto a flat fixing surface (10), the spacer being characterized in that :
each pillar (2) comprises at least one external side face (7, 8) perpendicular to said fixing surface (10) and at least one first locking element (14) located near to said side face ; each side wall (3, 4) comprises, at the level of each of its said opposite ends, at least one second locking element (15) designed to cooperate with said first locking element (14) of a pillar ; and in that
said first and second locking elements (14, 15) are arranged in such a way that assembly of a side wall (3, 4) with a pillar (2) is obtained by first moving said side wall towards the pillar according to a first movement (40) perpendicular to said side face (7, 8) of the pillar and by then moving said side wall according to a second movement (41) in the plane of said side wall of the pillar in order to obtain positive locking of the side wall with the pillar.

2. The spacer according to claim 1, characterized in that the first and second locking elements (14, 15) are arranged in such a way that said second movement (41) of the side wall takes place in a direction perpendicular to said fixing surface (10) of the spacer and that this movement is directed towards this fixing surface.

3. The spacer according to either one of the foregoing claims, characterized in that said first locking element (14) is formed by at least one pin (20, 21) forming a protuberance with respect to the pillar, this pin having its longitudinal axis parallel to the plane of said fixing surface (10), and in that said second locking element (15) is formed by at least one recess (31) made up of a first recess zone (31A) emerging out from the side wall (3, 4) following a direction (31F) perpendicular to said side face (7, 8) of the corresponding pillar and of a second recess zone (31B) emerging into the first recess zone (31A) following a direction (31F) perpendicular to said fixing surface (10).

4. The spacer according to any one of the foregoing claims, characterized in that each pillar (2) comprises a housing (26) arranged in said side face (7, 8) and in that said first locking element (14) is disposed in this housing in such a way that said side wall (3, 4) comes and fits, at the level of its end which comprises said second locking element (15), into this housing (26) of the pillar so as to be locked to the pillar in a position in which the external side surface (36) of said side wall is in the same plane as said corresponding side face (7) of the pillar.

5. The spacer according to claim 4, characterized in that :
said housing (26) presents the form of a straight groove in the shape of a concave dihedron comprising a first face (25) perpendicular on the one hand to said side face (7) of the corresponding pillar and on the other hand to said fixing surface (10) of the spacer, and a second face (28) perpendicular on the one hand to said first face (25) and on the other hand to said fixing surface of the spacer, and in that said pin (20, 21) is fixed onto said first face (25) of the housing ; and
said end of said side wall (3, 4) presents the shape of a convex dihedron which exactly follows the shape of the concave dihedron of said housing (26) arranged in the pillar.

6. The spacer according to any one of the claims 3 to 5, characterized in that two first locking elements (20, 21) are provided spaced apart from one another and aligned in a direction (22) perpendicular to said fixing surface (10), the distance separating these two first locking elements being smaller than the height of said pillar (2) or of said side wall (3, 4), and in that two second locking elements (31, 32) are also provided located on said side wall in such a way as to correspond to said two first locking elements (20, 21) when said side wall (3, 4) is locked onto the pillar (2).

7. The spacer according to claim 6, characterized in that one (31) of the two second locking elements has a deeper second recess zone (31B) than the second recess zone of the other (32) second locking element so that when said side wall (3, 4) is completely in place on the pillar (2) to be locked onto the latter, only one of the two first locking elements comes up against the stop formed by the side wall (3, 4) at the level of the bottom of the second zone of one of said recesses.

8. The spacer according to any one of the foregoing claims, characterized in that means (50) are in addition provided on the pillar (2) and on the side wall (3, 4) performing an additional locking of these two parts which is designed to prevent their moving apart from one another in a direction according to which the locking effect obtained by said first and second locking elements is not effective, said additional locking being achieved by engaging an element of said side wall into an element of said pillar, this engagement occurring when said second movement of said side wall takes place.

9. The spacer according to any one of the foregoing claims, characterized in that at least one base is in addition provided on each pillar for fixing by screws onto said fixing surface, this base being situated against a lateral part of the pillar placed inside the perimeter of the spacer once assembled in such a way that the base and the corresponding screws are not visible from the outside of the assembled spacer.

10. The spacer according to any one of the foregoing claims, characterized in that it is formed by four identical pillars and by four side walls identical two by two in such a way that the assembly constitutes a rectangular spacer, and in that each pillar is of a general parallelepipedic shape with two perpendicular side faces forming the external angle of the spacer, and presents a symmetry with respect to a mid-plane with respect to the two side faces.
